# EUROPEAN PATENT APPLICATION

(11) **EP 1 933 317 A1**
(43) Date of publication of application: **18.06.2008**
(21) Application number: 06392017.7
(22) Date of filing: 13.12.2006
(51) Int. Cl.: G11B 20/00, G11B 20/10, G06F 21/00

(54) **DVD-Video content protection system with integrated unlock code**

(71) Applicant: Perpetual Action Group S.A.M., MC 98000 Monaco (MC)
(72) Inventor: Devasini, Giancarlo, 20122 Milano (IT)

(57) **Abstract**

The present invention is based on an authentication and access control system to the protected contents of a DVD-VIDEO in which the Release Code RK is different for each session. Sharing the RK code with other users does not allow to unlock the protected contents.
This method protects the content of a dvd-video, by the creation and management of an authentication server containing a database of public codes and secret keys, and it is characterized by the user entering an unlock code different for each DVD session, and it is also characterized by the generation of the above mentioned unlock code by the authentication server remotely contacted by the user.
The system requires the user to connect to the authentication server via one of the following methods:
- A fixed telephone with "tones" selection
- A Mobile phone with SMS sending/receiving capabilities
- A personal Computer with Internet access
The system works on a common DVD-VIDEO READER compliant to the specifications.

## Description

### BACKGROUND OF THE INVENTION AND RELATED ART.

The protection systems currently used to restrict access to the contents of a DVD-VIDEO are based on a "secret code" (TK) fixed for every TITLE.

In order to access the protected contents, the user must connect to a server and provide the secret code TK.

The server provides a release code RK.

Since the secret code TK is common for every DVD disk of the same TITLE, the release code RK is common as well, and allows therefore to unlock the protected contents of every DVD-VIDEO with the same TITLE.

Users can share the same RK code and thus bypass the access control system.

### SUMMARY OF THE INVENTION.

The present invention is based on an authentication and access control system to the protected contents of a DVD-VIDEO in witch the Release Code RK is different for each session. Sharing the RK code with other users does not allow to unlock the protected contents.

The system requires the user to connect to the authentication server via one of the following methods:
- A fixed telephone with "tones" selection
- A Mobile phone with SMS sending/receiving capabilities
- A personal Computer with Internet access

The system works on a common READER DVD-VIDEO compliant to the specifications.

### OUTLINE OF OPERATION:

1. The DVD-VIDEO is loaded into a DVD-VIDEO Player
2. A menu allows the access to "free" contents, the access to protected contents preview (for example a trailer of a protected movie), and the access to the authentication system for protected contents access.
3. If the user select the protected contents, a NUMERICAL CODE (CK) is shown on the screen. This code is different for each session.
4. A Unique serial code (UC) is printed on each DVD or DVD box/case.
5. The user gets connected to the authentication server via one of the above mentioned methods and enters the numerical code(CK) shown on the TV screen together with the Unique serial code (UC) present on the DVD or DVD box/case
6. The authentication server calculates the UNLOCK CODE (RK) and provides it to the user.
7. A numeric keypad is shown on the TV screen. The user enters the UNLOCK CODE (RK) using the DVD-PLAYER remote controller.
8. If the release code is correct, access to the protected contents is granted.

### HOW IT WORKS:

1. For each TITLE a public code (Title Code, TC) is created.
2. For each TITLE a secret key (Title Key, TK) is created. The authentication server builds a database of Title Keys TK and Title Codes TC.
3. On each DVD or DVD box/case a Unique serial Code (UC) is printed
4. when the DVD-VIDEO is loaded into the DVD-VIDEO player, a Random Code RC is generated.
5. A function, combining TK and RC generates a Session Key (SK) that is stored into a register of the reader for the authentication process.
6. The RC code and TC code are combined into a CK code shown on the screen.
7. The user provides CK and UC codes to the authentication server via one of the communication channels available
8. From CK code the servers extract RC and TC codes.
9. Querying the database of TK keys and TC codes, knowing the function, the server calculates the Unlock Code RK and provides it to the user.
10. The server records the Unlock request of title TC from User UC.
11. The user enters the UNLOCK CODE (RK) using the DVD-PLAYER remote controller.
12. The DVD-VIDEO reader compares the Unlock Code RK with the Session Key SK. If they match, access to the protected contents is granted

### EXAMPLE OF OPERATION:

One example of the authentication process is shown below.

In this example, the following functions are used:
SK = RC xor TK and 999
CK= Concatenation(TC,RC)
1 DVD manufacturing
   1.1 A DVD-VIDEO with TC=00123 is made.
   1.2 A Title Key TK=217 is assigned to Title Code TC=00123
   1.3 A batch of 1000 DVD-VIDEO is made. Unique Code from number 00000 to number 01000 is printed on each DVD or DVD box/case
2 DVD Use
   2.1 DVD-VIDEO 00987 is loaded into the DVD-VIDEO player
   2.2 Protected content is selected
   2.3 A Random Code RC=547 is generated
   2.4 SK=RC xor TK and 999 - > SK=547 xor 217 and 999 - > SK=738 is stored into one of the DVD-VIDEO player's internal registers
   2.5 CK= Concatenation(TC,RC) - > CK=00123547 is provided to the user together with the instructions how to contact the authentication server
   2.6 the user provides to the authentication server the CK code 00123547 and the DVD Unique Code UC=00987
   2.7 the authentication server does the following:
      2.7.1 Gets TC=00123 and RC=547 from CK=00123547 code
      2.7.2 Recovers from the database the Title Key TK associated with the Title Code TC- > TK=217
      2.7.3 Calculates the Unlock Code RK= RC xor TK and 999 - > RK =546 xor 217 and 999 - > RK=738
      2.7.4 Provides the Unlock Code RK=738 to the user
      2.7.5 Records the Unlock request of title it TC=00123 from user UC=00987
   2.8 the user enters the UNLOCK CODE RK=738 using the DVD-PLAYER remote controller
   2.9 The DVD-VIDEO reader compares the Unlock Code RK with the internally-stored Session Key SK.
   2.10 If RK = SK, access to the protected contents is granted.

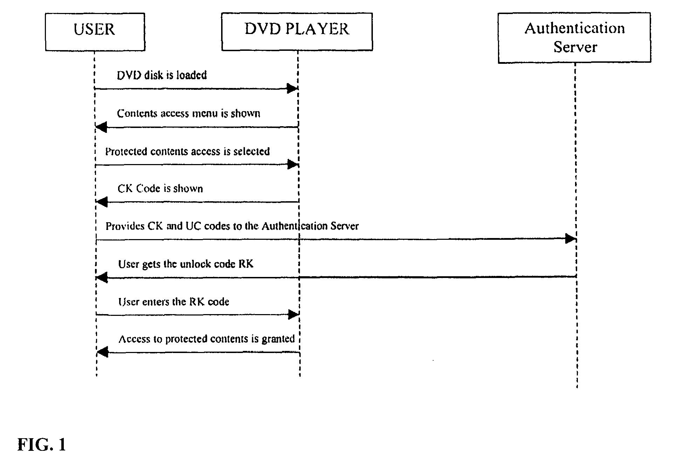

## Claims

1. A method for protecting the content of a DVD-video, **characterized by** the creation and management of an authentication server containing a database of public codes and secret keys, **characterized by** user entering of an unlock code different for each DVD session, and **characterized by** the generation of the above mentioned unlock code of by the authentication server remotely contacted by the user.

2. The method of claim 1, **characterized by** the creation of public codes and secret keys to every DVD-video title.

3. The method of claim 1, **characterized by** the creation of a public code (said TC) to a DVD-video title.

4. The method of claim 1, **characterized by** the association of a secret key (said TK) to each public code, as in claim 3.

5. The method of claim 1, **characterized by** the creation of a database of keys TK associated to relative code TC, as in claim 4.

6. The method of claim 1, **characterized by** the creation of an authentication server.

7. The method of claim 1, **characterized by** the storage and the management of the public codes and secret keys database by the authentication server, as in claim 6.

8. The method of claim 1, **characterized by** the assignment of an unique serial code (said UC).

9. The method of claim 1, **characterized by** the printing of a unique serial code (UC), as in claim 8, on each DVD-video or DVD case/box.

10. The method of claim 1, **characterized by** the generation of an random code (RC) each time a DVD-video is loaded into the DVD player.

11. The method of claim 1, **characterized by** a variable mathematical function that, combining TK and RC, generates a session key (said SK), different for each session.

12. The method of claim 1, **characterized by** the storage of the session key (SK), as in claim 11, into an register of the DVD player.

13. The method of claim 1, **characterized by** a variable mathematical function, stored inside of the DVD, that combining the RC and TC codes creates a CK code.

14. The method of claim 1, **characterized by** the creation of a DVD menu showing the CK code to the user.

15. The method of claim 1, **characterized by** providing the authentication server, by a remote connection - via telephone, SMS or Internet - with UC and CK codes.

16. The method of claim 1, **characterized by** the authentication server extraction of codes RC and TC from code CK.

17. The method of claim 1, **characterized by** the authentication server querying of the database storing the secret keys (TK) related to the provided TC code

18. The method of claim 1, **characterized by** the authentication server calculation of an unlock code (said RK).

19. The method of claim 1, **characterized by** providing the user with the unlock code RK.

20. The method of claim 1, **characterized by** user entering by mean of the remote controller of the DVD player of the unlock code RK.

21. The method of claim 1, **characterized by** the authentication server comparison of RK and SK codes.

22. The method of claim 1, **characterized by** the access granting to the protected contents of DVD if the codes comparison, as in claim 21, is positive.
